## Europäisches Patentamt
## European Patent Office
## Office européen des brevets

(19)

(11) Numéro de publication: **0 140 737**
**B1**

(12) **FASCICULE DE BREVET EUROPÉEN**

(45) Date de publication du fascicule du brevet:
23.07.86

(51) Int. Cl.⁴: **F 01 D 5/02,** F 02 C 7/12

(21) Numéro de dépôt: **84401767.3**

(22) Date de dépôt: **06.09.84**

(54) **Disque de compresseur avec accélérateur centripète intégré pour l'aspiration d'air dans un dispositif de refroidissement d'une turbine à gaz.**

(30) Priorité: **21.09.83 FR 8314975**

(43) Date de publication de la demande:
**08.05.85 Bulletin 85/19**

(45) Mention de la délivrance du brevet:
**23.07.86 Bulletin 86/30**

(84) Etats contractants désignés:
**DE FR GB**

(56) Documents cité:
**EP-A-0 049 655
CH-A-267 499
CH-A-492 869
FR-A-2 292 866
GB-A-712 051**

(73) Titulaire: **SOCIETE NATIONALE D'ETUDE ET DE CONSTRUCTION DE MOTEURS D'AVIATION, "S.N.E.C.M.A.", 2 Boulevard Victor, F-75015 Paris (FR)**

(72) Inventeur: **Naudet, Jacky, 9, place de la Remise Bondoufle, F-91000 Evry (FR)**

(74) Mandataire: **Moinat, François, S.N.E.C.M.A. Service des Brevets Boîte Postale 81, F-91003 Evry Cedex (FR)**

EP 0 140 737 B1

LIBER, STOCKHOLM 1986

Description

La présente invention a pour objet un disque de compresseur avec accélérateur centripète intégré pour l'aspiration d'air dans un dispositif de refroidissement d'une turbine à gaz.

Dans les moteurs refroidis par l'intérieur du rotor du compresseur haute pression, l'air de refroidissement destiné aux disques et aubes de turbine est en général prélevé dans la veine du compresseur par des orifices percés dans les viroles bu tambour du compresseur puis acheminé vers les turbines par l'intérieur du tambour.

Ces perçages présentent l'inconvénient d'introduire des contraintes de flexion qui limitent la valeur admissible du rayon maximal de la virole.

Cette restriction du diamètre des viroles entraîne des conséquences sur la technologie des éléments de la veine et sur le rendement du refroidissement. En ce qui concerne la technologie des éléments de la veine, cette restriction du diamètre des viroles entraîne une impossibilité de recourir à des attaches marteau qui sont moins coûteuses que les attaches brochées. Les attaches marteau en effet ont une masse supérieure à celle des attaches brochées et les efforts centrifuges qu'elles exercent sur la jante d'un disque de compresseur en deux parties auraient tendance à faire écarter les deux demi-disques. La possibilité de placer la virole le plus haut possible permet d'entretoiser efficacement les disques et de s'opposer à la séparation des demi-disques. En ce que concerne le refroidissement, l'importance de l'enceinte morte entraîne des recirculations qui perturbent le débit d'air de refroidissement.

Pour remédier à ces inconvénients, on utilise dans la demande de brevet EP—A—0 049 655 un dispositif de refroidissement d'une turbine à gaz dans lequel l'air de refroidissement de la turbine est prélevé dans le plan du disque portant les aubes du compresseur par des orifices situés sur les plates-formes des aubes.

La diminution des contraintes de flexion qui en résulte permet de relever les attaches du tambour sur le disque à un niveau radial voisin de la jante, cette disposition est particulièrement favorable à la tenue des disques constitués de deux demi-disques soudés par la jante et elle permet d'utiliser des aubes à pied marteau, plus lourdes, mais moins chères que les aubes brochées classiques. Le supplément de contrainte radiale subie par le disque est bien absorbé par cs dernier du fait de la position haute des viroles entretoises formant le tambour. Par ailleurs, pour améliorer le rendement de ce prélèvement, les demi-disques sont munis intérieurement, pour accélérer le débit, d'aubages centripètes.

Toutefois, on a constaté lors des essais que la présence des ailettes à l'intérieur de chaque demi-disque introduit des efforts centrifuges dissymétriques qui entraînent à leur tour des déformations des demi-disques et risquent de provoquer à terme une rupture du disque au niveau de la soudure de la jante.

La présente invention a donc pour but de remédier à cet inconvénient. Conformément à la présente invention, l'accélérateur centripète comprend plusieurs secteurs montés de façon amovible dans l'espace ménagé entre les deux demi-disques du compresseur, chaque secteur étant constitué de deux demi-coquilles présentant sur leur face intérieure des nervures en forme d'aube centripète par lesquelles les demi-coquilles sont assemblées.

Cette disposition permet d'améliorer le rendement du prélèvement d'air par un guidage jusqu'à la sortie du compresseur.

L'utilisation d'aubages non intégrés aux faces du disque permet d'obtenir des faces internes des demi-disques qui sont lisses; les deux faces sont sensiblement symétriques et les contraintes centrifuges sont équilibrées.

Par ailleurs, l'usinage des demi-disques est plus simple et moins coûteux.

Le disque du compresseur avec accélérateur centripète intégré présente un gain de masse sur les dispositifs antérieurs. Enfin, la disposition adoptée permet un contrôle aisé de la qualité de la soudure de la jante.

D'autres caractéristiques et avantages de l'invention seront mieux compris à la lecture de la description qui va suivre d'un mode de réalisation et en se référant aux dessins annexés, sur lesquels:

— la figure 1 est une vue en coupe radiale d'un disque de compresseur muni d'un accélérateur centripète suivant l'invention;
— la figure 2 est une vue en coupe suivant la ligne II—II de la figure 1;
— la figure 3 est une vue en coupe suivant le plan médian d'un disque de compresseur équipé d'un accélérateur centripète suivant l'invention.

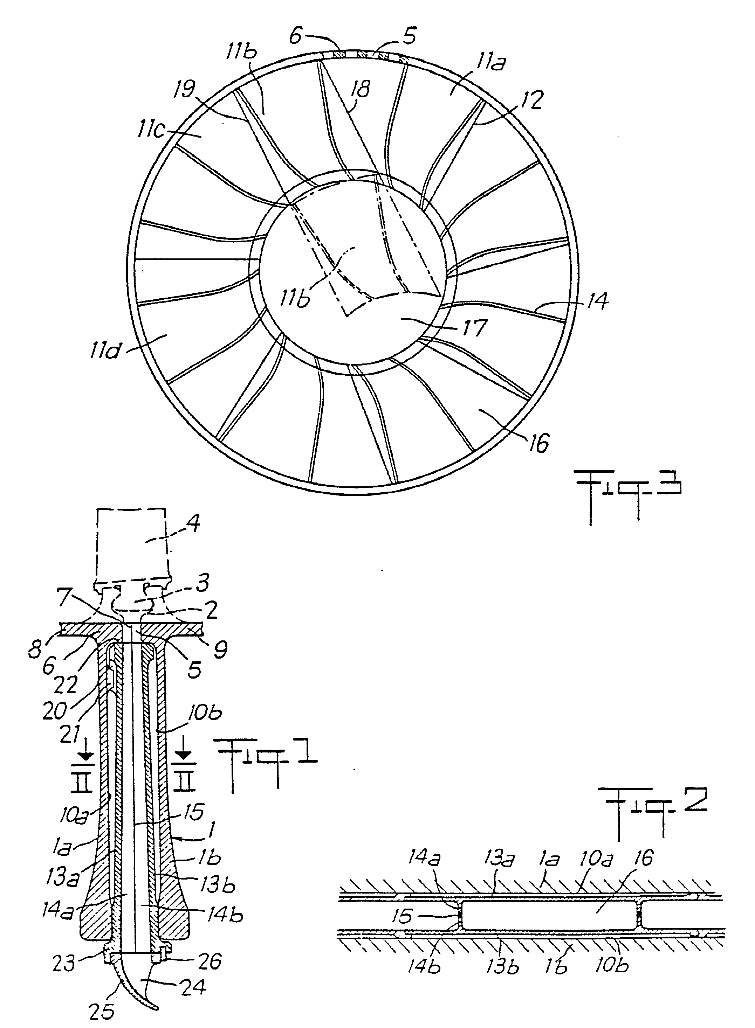

Aux figures 1 et 2, on a représenté un disque 1 de compresseur pour moteur à turbine à gaz et qui présente sur son pourtour une rainure 2 dans laquelle sont engagés les organes d'attache marteau 3 des ailettes 4.

Le prélèvement d'air est effectué dans le plan du disque 1 à partir des orifices 5 (figures 1 et 3) percés dans les platesformes des aubes 4.

Le disque 1 de compresseur est constitué de deux demidisques 1a, 1b à flancs pratiquement symétriques (figure 1) qui sont soudés en 7 de façon connue au niveau de la jante 6, laquelle se prolonge par des viroles entretoises 8, 9 qui sont ultérieurement soudées entre elles pour constituer le tambour.

Dans l'espace délimité par les faces internes 10a, 10b des demi-disques, est monté un accélérateur centripète qui comprend plusieurs secteurs 11a, 11b, 11c, 11d délimités entre eux par des bords 12.

Ces secteurs sont montés de façon amovible dans l'espace ménagé entre les deux demi-disques du compresseur et chaque secteur 11a, 11b est constitué de deux demi-coquilles 13a, 13b présentant sur leur face intérieure des nervures

14a, 14b en forme d'aubes centripètes. Les demi-coquilles 13a, 13b constituant un secteur sont assemblées et soudées en 15 par diffusion sur toute la longueur des nervures 14a, 14b.

De cette manière, on constitue à l'intérieur des secteurs 11a, 11b, 11c ... des aubes centripètes 14 qui délimitent entre elles des passages radiaux 16 d'air de refroidissement en provenance des orifices 5 et s'écoulant vers la partie centrale 17 du compresseur.

Pour permettre leur montage, les secteurs 11a, 11b, 11c, 11d qui sont au nombre de huit dans le cas de la figure 3 ne présentent pas tous une même forme trapézoïdale. Les secteurs voisins 11a et 11c sont conformés de façon à comporter entre eux, une fois assemblés, deux bords parallèles 18, 19, de telle sorte que le secteur 11b monté en dernier comporte de construction deux bords parallèles correspondants de façon à pourvoir le glisser entre les bords parallèles 18, 19 des secteurs 11a, 11c.

Pour assurer le verrouillage circonférentiel des secteurs 11a, 11b, 11c, 11d ..., ceux-ci comportent chacun une nervure radiale 20 située sur la face extérieure de l'une des demi-coquilles 13a et qui est engagée au montage entre deux nervures radiales parallèles 21 situées sur la face interne 10a du demi-disque 1a.

Par ailleurs, les secteurs 11a, 11b, 11c, 11d viennent en butée par leur bord externe 22 contre le face interne de la jante 6 du disque 1, de manière que les passages radiaux 16 se trouvent en regard des orifices 5 d'entrée d'air. Le bord interne 23 des secteurs 11a, 11b, 11c, 11d reçoit une pièce de révolution 24 dont une face 25 comporte une concavité orientée vers l'aval et constitue un déflecteur qui guide l'air du-delà de sa sortie du disque 1 et évite qu'il vienne percuter l'arbre. La pièce de révolution 24 est maintenue en place par un organe de verrouillage 26 sur le secteur.

Cette disposition améliore le rendement du prélèvement d'air. En effet, l'air est guidé dès sa sortie de la jante du disque 1, alors que, dans le dispositif faisant l'objet de la demande de brevet EP—A—0 049 655, il passait d'abord dans une chambre qui était rendue nécessaire par les opérations de soudage.

## Revendications

1. Disque de compresseur avec accélérateur centripète intégré pour l'aspiration d'air dans un dispositif de refroidissement d'une turbine à gaz, le prélèvement d'air au niveau du compresseur étant effectué par des orifices situés sur les plates-formes des aubes, dans le plan médian du disque de compresseur qui est constitué de deux demi-disques, caractérisé en ce que l'accélérateur centripète comprend plusieurs secteurs (11a, 11b, 11c, 11d) montés de façon amovible dans l'espace ménagé entre les deux demi-disques (1a, 1b) du compresseur, chaque secteur (11a, 11b, 11c, 11d) étant constitué de deux demi-coquilles (13a, 13b) présentant sur leur face intérieure des nervures (14a, 14b) en forme d'aube centripète par lesquelles les demi-coquilles (13a, 13b) sont assemblées.

2. Disque de compresseur suivant la revendication 1, caractérisé en ce que les secteurs (11a, 11b, 11c, 11d) sont en butée par leur bord externe (22) contre la jante (6) du disque (1), l'entrée des canaux (16) entre les aubes (14a, 14b) coïncidant avec les orifices de sortie (5) ménagés dans les plates-formes des aubes.

3. Disque de compresseur suivant les revendications 1 et 2, caractérisé en ce que les secteurs (11a, 11b, 11c, 11d) de l'accélérateur centripète présentent sur une face externe et sur leur bord externe une nervure radiale qui est insérée entre deux nervures radiales portées par l'une des faces internes (10a, 10b) des demi-disques du compresseur.

4. Disque de compresseur suivant la revendication 1, caractérisé en ce que les secteurs (11a, 11b, 11c, 11d) sont généralement de forme trapézoïdale et deux des secteurs voisins (11a, 11c) délimitent entre eux après leur assemblage un espace dont les bords (18, 19) sont parallèles et qui reçoit un secteur (11b) de verrouillage dont les bords sont également parallèles.

5. Disque de compresseur suivant la revendication 1, caractérisé en ce que le bord interne (23) les secteurs (11a, 11b, 11c, 11d) reçoit une pièce de révolution (24) constituant un déflecteur pour l'écoulement de l'air à la sortie de l'accélérateur centripète.

## Patentansprüche

1. Verdichterscheibe mit integriertem Zentripetalbeschleuniger zum Ansaugen von Luft in eine Kühlvorrichtung einer Gasturbine, bei der die Entnahme der Luft in Höhe des Verdichters durch Öffnungen erfolgt, die auf den Plattformen der Schaufel in der Mittelebene der aus zwei Halbscheiben bestehenden Verdichterscheibe liegen, dadurch gekennzeichnet, daß der Zentripetalbeschleuniger mehrere Sektoren (11a, 11b, 11c, 11d) umfaßt, die lösbar in dem zwischen den beiden Halbscheiben (1a, 1b) des Verdichters vorgesehenen Zwischenraum montiert sind, und daß jeder dieser Sektoren (11a, 11b, 11c, 11d) aus zwei Halbschalen (13a, 13b) besteht, die auf ihrer Innenseite Rippen (14a, 14b) in Form von zentripetalen Schaufeln besitzen, mit denen die Halbschalen (13a, 13b) zusammengefügt sind.

2. Verdichterscheibe nach Anspruch 1, dadurch gekennzeichnet, daß die Sektoren (11a, 11b, 11c, 11d) mit ihrem Außenrand (22) an dem Kranz (6) der Scheibe (1) anliegen, wobei der Eingang der Kanäle (16) zwischen den Schaufeln (14a, 14b) mit den in den Plattformen der Schaufeln angebrachten Ausgangsöffnungen (5) zusammenfällt.

3. Verdichterscheibe nach Anspruch 1 und 2, dadurch gekennzeichnet, daß die Sektoren (11a, 11b, 11c, 11d) des Zentripetalbeschleunigers auf einer Außenseite und an ihrem Aussenrand eine radiale Rippe besitzen, die zwischen zwei von einer der Innenseiten (10a, 10b) der Halbscheiben des Verdichters getragenen radialen Rippen eingefügt ist.

4. Verdichterscheibe nach Anspruch 1, dadurch gekennzeichnet, daß die Sektoren (11a, 11b, 11c, 11d) im wesentlichen trapezförmig ausgebildet sind, daß zwei benachbarte Sektoren (11a, 11c) nach ihrem Zusammenfügen zwischen sich einen Raum begrenzen, dessen Ränder (18, 19) parallel zueinander verlaufen, und daß in diesem Raum ein Verriegelungssektor (11b) aufgenommen ist, dessen Ränder ebenfalls parallel sind.

5. Verdichterscheibe nach Anspruch 1, dadurch gekennzeichnet, daß der Innenrand (23) der Sektoren (11a, 11b, 11c, 11d) ein Rotationsteil (24) aufnimmt, das einen Deflektor für den Austritt der Luft am Ausgang des Zentripetalbeschleunigers bildet.

**Claims**

1. Compressor disc with integral centripetal accelerator for supplying air to a cooling device of a gas turbine, the bleed of air in the compressor zone being effected by orifices disposed on the platforms of the blades, in the median plane of the compressor disc which is constituted by two half discs, characterized in this that the centripetal accelerator comprises a plurality of sectors (11a, 11b, 11c, 11d,) detachably mounted within the space provided between the two half-discs (1a, 1b) of the compressor, each sector (11a, 11b, 11c, 11d,) being constituted by two semi-shells (13a, 13b) having on their internal faces ribs (14a, 14b) in the form of a centripetal blade by which the semi-shells (13a, 13b) are assembled.

2. Compressor disc according to claim 1, characterized in this that the sectors (11a, 11b, 11c, 11d) are in contact at their outer edge (22) against the rim (6) of the disc (1), the inlets of the passages (16) between the blades (14a, 14b) coinciding with the outlet orifices (5) provided in the platforms of the blades.

3. Compressor disc according to claims 1 and 2, characterized in this that the sectors (11a, 11b, 11c, 11d) of the centripetal accelerator have on one outer face and on their outer edge a radial rib which is inserted between two radial ribs carried by one of the internal faces (10a, 10b) of the half discs of the compressor.

4. Compressor disc according to claim 1, characterized in this that the sectors (11a, 11b, 11c, 11d) are generally of trapezoidal form and two of the adjacent sectors (11a, 11c) define between them after their assembly a space of which the boundaries (18, 19) are parallel and which receive one locking sector (11b) of which the edges are also parallel.

5. Compressor disc according to claim 1, characterized in this that the internal edge (23) of the sectors (11a, 11b, 11c, 11d) accommodate a body of revolution (24) constituting a deflector for the flow of air into the inlet of the centripetal accelerator.

**Fig.3**

**Fig.1**

**Fig.2**